# EUROPEAN PATENT APPLICATION

(11) **EP 2 037 248 A1**
(43) Date of publication of application: **18.03.2009**
(21) Application number: 08015991.6
(22) Date of filing: 11.09.2008
(51) Int. Cl.: G01K 17/06, F24D 19/10

(54) **Set of energy submeters**

(30) Priority: 13.09.2007 ES 200702476
(71) Applicant: Pretensados Zaragoza, S.A., 50015 Zaragoza (ES)
(72) Inventor: Joven Martinez, Antonio, 50015 Zaragoza (ES); Joven Martinez, An, 50015 Zaragoza (ES); Moreno, Duce, José Antonio, 50015 Zaragoza (ES)
(74) Representative: Schäfer, Matthias W.

(57) **Abstract**

A set of energy submeters of the type used in dwellings for the distribution, on each landing, of the individual consumption of domestic hot water and for heating and other various uses, comprising a manifold for heating and another manifold for domestic hot water, the manifold for heating having inlet and return pipes made of thermoplastic material except for the threads that are metallic and a plurality of individual inlet and return pipes, one each for each different dwelling, each of which in turn includes at least one energy meter with separate temperature probe and an electrovalve, and the manifold for domestic hot water having an inlet pipe, made of thermoplastic material except for the threads that are metallic, from which the individual inlet pipes for each dwelling emerge, each of which includes at least one energy meter.

## Description

The present invention relates, as its title indicates, to a set of energy submeters of the type used in dwellings for the distribution, on each landing, of the individual consumption of domestic hot water and for heating and other various uses in each dwelling, characterised in that it comprises a manifold for heating and another manifold for domestic hot water, the manifold for heating being formed by inlet and return pipes in thermoplastic material, provided with an inlet and return valve, mesh filter and non-return valve, from which the individual inlet and return pipes for each dwelling emerge, these in turn being provided with metal electrovalves, ball valves, ball valves for temperature probe control, balancing valves, energy meters with a temperature probe holder and metal check valve, and ending in a plurality of connections for several outlet and return circuits, all of which is supported by a metal structure, and the manifold for domestic hot water being formed by an inlet pipe in thermoplastic material, provided with an inlet valve and mesh filter, from which the individual inlet pipes for each dwelling emerge, these in turn being provided with ball valves, energy meters and a non-return ball valve, and ending in connections for the outlet circuits, all of which is supported by a metal structure.

At the current time numerous, different types of submetering elements for meters are widely known and used in the construction of dwellings, but most of them are carried out using copper and metal pipes plus hot and cold water flow meters. These types of devices have the chief drawback of not being able to measure the energy consumed, but only the flow of hot water. They also present construction and maintenance problems and have a high percentage of maintenance energy loss because of their totally metallic conductors.

Examples of this type of construction are to be found, for example, in Utility Model 289672 *"Modular set for water submeters"* which uses conventional flow meters and has the drawback that it only presents inlet and outlet pipes rather than a complete assembly of elements.

We can also find constructions such as that described in Utility Model 200100683 *"Perfected set of submeters",* although it reveals a completely different layout, being oriented more towards conventional water meters and not having shut-off cocks. It has the drawback that it is not specific to energy meters and, as in the previous case, it only presents inlet and outlet pipes, not a complete assembly of elements. Utility model 200400948 " *Set for the centralisation of water meters"* describes a solution that is identical to the previous one and thus reveals the same problems.

Utility model 200202512 *"Set for the installation of water meters and the like"* describe a different structure, but again it is only provided with inlet and outlet pipes for conventional water meters, thus presenting similar problems to the previous cases.

Likewise, numerous types of energy meters are known, such as for example, that described in Patent W02007/093732 *"Thermal energy meter",* however they are always presented as individual elements and never as forming part of a complete submeter structure.

In order to overcome the current existing problem of submeter structures or sets for dwellings, the set of energy submeters that is the object of the present invention has been designed, comprising a manifold for heating and another manifold for domestic hot water (DHW).

The manifold for heating has inlet and outlet pipes, made of thermoplastic material except for the threads, which are metal (brass, stainless steel...), provided with an inlet and return valve, mesh filter and non-return valve, from which the individual inlet and return pipes for each dwelling emerge, preferably in a perpendicular manner, being in turn provided with metal electrovalves, ball valves, ball valves for temperature probe control, balancing valves, energy meters with temperature probe holder and metal check valve, ending in a plurality of connections for several inlet and return circuits.

The energy meters measure the heat difference between the inlet and outlet, the flow of liquid and usage time, and thus directly calculate the energy consumed.

The electrovalves allow remote control, by means of the remote opening and closing of the water supply, enabling the remote centralisation of both the control of supply and of the flow measurements and energy consumption of each dwelling.

The whole of the manifold assembly for heating is supported by a metallic base structure by means of isophonic clamps to prevent vibrations and noises from being transmitted to the dwellings.

The manifold for domestic hot water has an inlet pipe, made of thermoplastic material except for the threads that are metallic (brass, stainless steel ...), that is provided with an inlet valve and mesh filter, from which the individual inlet pipes for each dwelling emerge preferably in a perpendicular manner, these in turn being provided with ball valves, energy meters and a non-return ball valve, ending in connections for the outlet circuits.

The manifold assembly for domestic hot water is also supported by a metallic base structure by means of isophonic clamps to prevent vibrations and noises from being transmitted to the dwellings.

The manifold for heating and the manifold for domestic hot water can be mounted adjacently or separated.

This set of energy submeters presented, provides numerous advantages over the devices currently available, its most important advantage being that its mechanical integration in modules allows quick installation, resulting in savings on time and labour.

Another important advantage is that it facilitates maintenance since it is provided with a plurality of shut-off valves that allow rapid repair or replacement of a damaged part without affecting the rest of the dwellings.

A further noteworthy advantage is the embodiment, which chiefly uses pipes made of non-metallic materials, of the thermoplastic type, with a longer duration, avoiding the tendency of rust and degradation, whilst also having a lower economic cost.

Another important advantage is the energy savings that are obtained because of less energy losses in the thermoplastic pipes and thanks to the balancing valves that are incorporated.

Also to be highlighted is the improvement that is obtained in durability thanks to the high-resistance, metallic membrane electrovalves.

Another noteworthy advantage is that the energy meters of the manifold for heating measure the heat difference between the inlet and outlet, the flow of liquid and usage time and thus directly calculate the energy consumed, obtaining a measurement that is as real as possible thanks to their proximity to the dwelling, given that the meters are located in cupboards in yards or corridors, eliminating possible energy losses and measurement errors.

The fact that the assembly includes electrovalves enables remote centralisation and automation of both the control of supply and flow measurements and energy consumption of each dwelling, avoiding the need to personally visit the meter room to take readings or to authorise or deny supply to a certain dwelling.

Also to be underlined is the advantage that both electrovalves and meters are centralised outside the dwellings, since this avoids noise and disturbance to the users of said dwellings.

Lastly, the undeniable advantage of the use of isophonic clamps to avoid transmission of vibrations and noises to dwellings must also be considered.

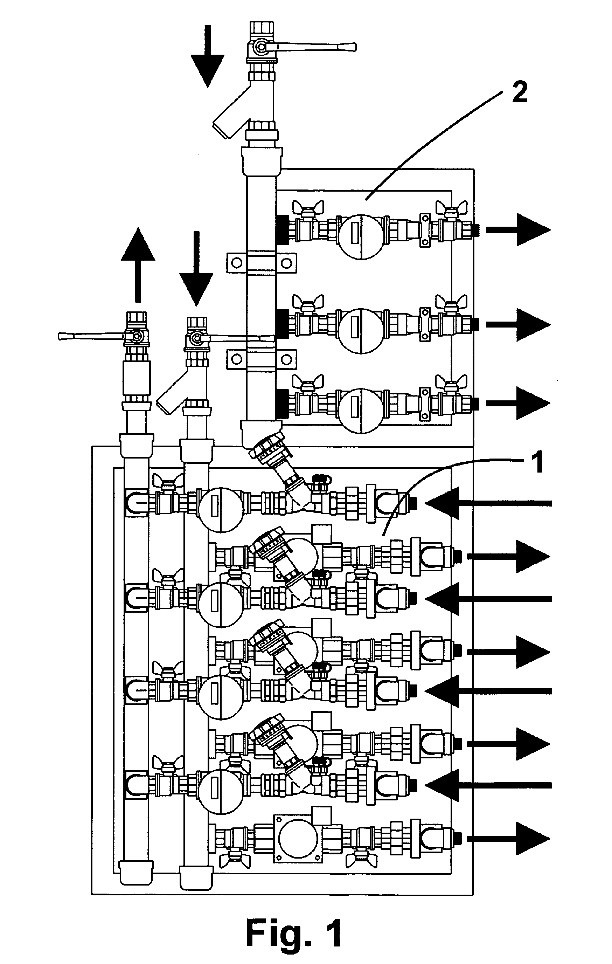

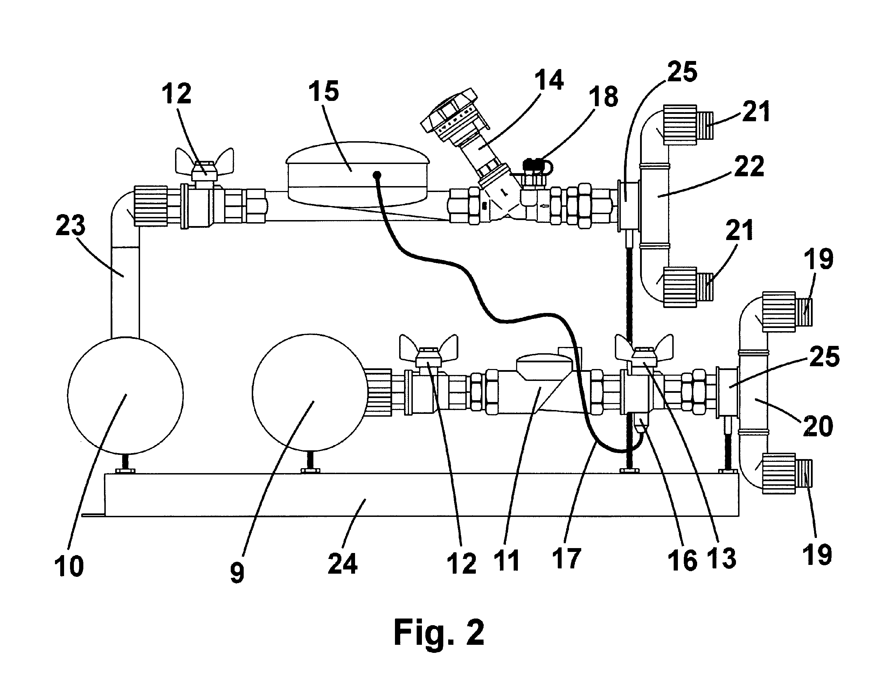

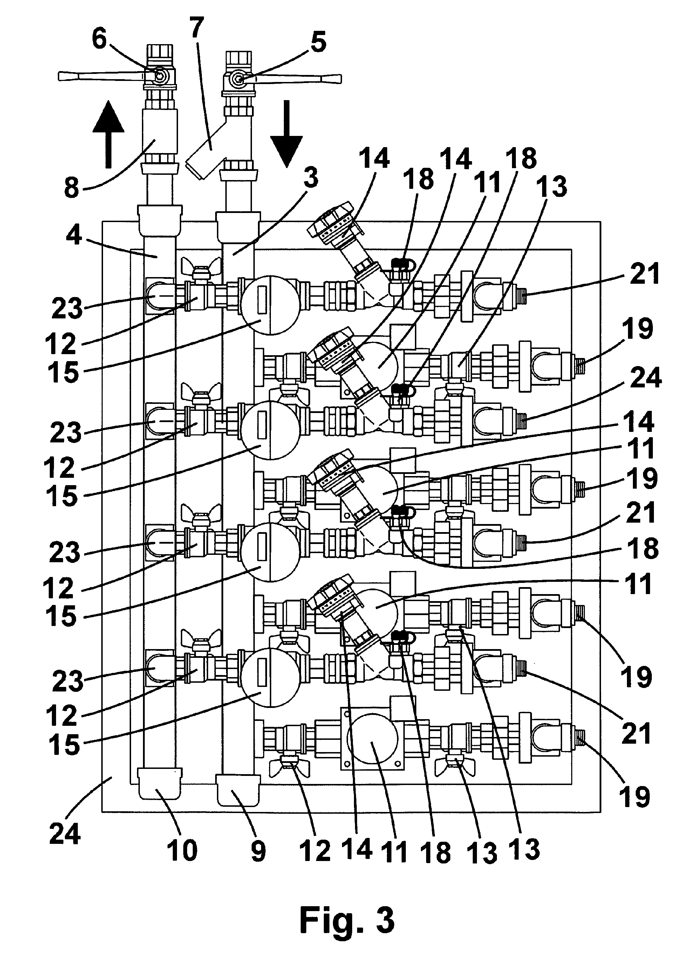

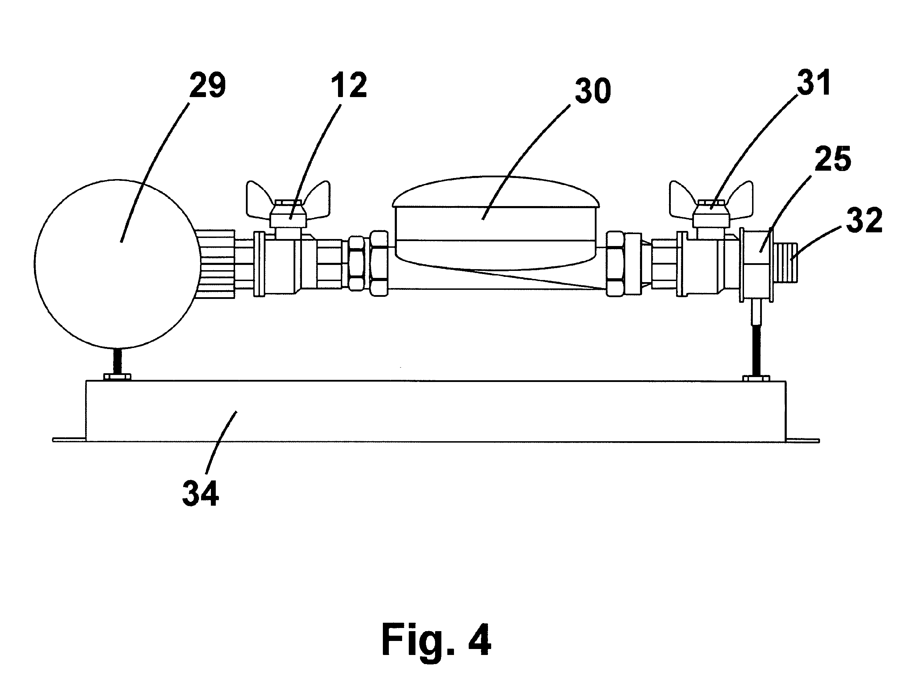

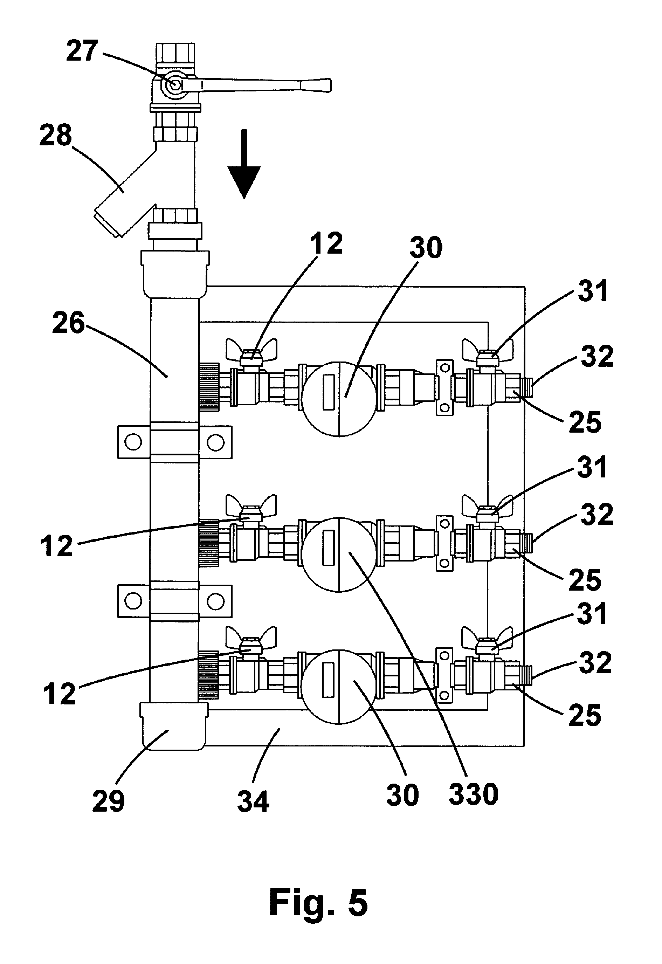

In order to better understand the object of the present invention, a preferential practical embodiment of a set of energy submeters has been portrayed in the drawing attached.
In said drawing, figure -1- shows a plan view of the manifold assembly for heating and manifold assembly for domestic hot water, mounted adjacently.
Figure -2- shows a detailed front view of the manifold for heating.
Figure -3- shows a detailed plan view of the manifold for heating.
Figure -4- shows a detailed front view of the manifold for domestic hot water.
Figure -5- shows a detailed plan view of the manifold for domestic hot water.

The set of energy submeters, that is the object of the present invention, is basically formed, as can be observed in the attached drawing, by a manifold for heating (1) and another manifold for domestic hot water (2).

The manifold for heating (1) has separate inlet pipes (3) and return pipes (4), both made of thermoplastic material except for the threads that are metal (brass, stainless steel ...). The inlet pipe (3) has an inlet valve (5), preferably metallic and of the ball type, and a mesh filter (7).

The return pipe (4) has an outlet valve (6), preferably metallic, of the ball type, and a non-return valve (8). Both pipes (3,4) end, at the opposite end to the valves (5,6) in an inlet pipe cap (9) and a return pipe cap (10) respectively, although an alternative embodiment with screwed terminals to continue the installation is foreseen.

From the inlet pipe (3) a plurality of individual inlet pipes, with a small section, emerge, preferably in a perpendicular manner, each of which incorporates at least one screw-down valve (12), preferably of the metallic ball type, an electrovalve (11), preferably metallic and with a membrane that withstands up to at least 110°C, another screw-down valve (13), preferably of the metallic ball type, for the control of a temperature probe (16), located on its bottom part, and several connections for the outlet circuits (19) also made with thermoplastic pipes (20).

The electrovalve (11) permits remote control by means of the remote opening and closing of the water supply.

From the return pipe (4), a plurality of individual return pipes, with a smaller section, emerge, being raised by elbows (23) that allow these pipes to be positioned on a higher plane, parallel to the pipes emerging from the inlet manifold (3) and which incorporate at least one screw-down valve (12), preferably of the metallic ball type, an energy meter (15) with a connecting cable (17) that connects it electrically to the temperature probe carrier (16) located on the inlet pipe. They also incorporate a balancing valve (14) and a check valve (18), preferably of the metallic type. It ends with several connections for the outlet circuits (21) also carried out with thermoplastic pipes (22).

The energy meters (15) measure the heat difference between the inlet, by means of the probe (16), and the outlet, in the energy meter itself (15), the flow of liquid and usage time, and thus directly calculate the energy consumed.

The whole of the heating manifold assembly (1) is supported by a metal structure (24) that acts as a base, by means of a plurality of isophonic clamps (25) to prevent vibrations and noise.

The manifold for domestic hot water (2) has an inlet pipe (26), made of thermoplastic material, except for the threads that are metallic (brass, stainless steel .....), provided with an inlet valve (27) and mesh filter (28), from which the individual inlet pipes for each dwelling emerge, preferably in a perpendicular manner, these in turn being provided with screw-down valves (12), energy meters (30) and screw-down non-return valves (31), preferably of the metallic ball type, ending in connections (32) for the outlet circuits.

The manifold for domestic hot water (2) is provided with an inlet pipe (26), made of thermoplastic material except for the threads which are metallic (brass, stainless steel...), provided with an inlet valve (27) and mesh filter (28), from which the individual inlet pipes for each dwelling emerge, preferably in a perpendicular manner, these in turn being provided with screw-down valves (12), energy meters (30) and screw-down non-return valves (31), preferably of the metallic ball type, ending in connections (32) for the outlet circuits.

The inlet pipe (26) ends, at the opposite end to the inlet valve (27), with a cap (29), although an alternative embodiment with a screwed terminal to continue the installation is also foreseen.

The domestic hot water manifold assembly (2) is also supported by a base metallic structure (34) by means of isophonic clamps (25) to prevent the transmission of vibrations and noises to the dwellings.

The manifold for heating (1) and the manifold for domestic hot water (2) can be mounted adjacently or separated.

The thermoplastic material used in the inlet manifold (3), the outlet manifold (4), inlet pipe (26) and the connections of the outlet circuits (19) and return circuits (21), as well as their thermoplastic pipes (20,22) and elbows (23), is a material from the group of: PP-R PN 20 (third-generation polypropylene random copolymer), PE-100 PN 16 (high density polyethylene), PB PN 16 (polybutylene), ABS PN 25 (Acrylonitrile styrene butadiene), PP-R with fibre and PP-R with aluminium core.

The weld between the thermoplastic elements will be a socket weld, butt weld, electrofusion, chemical weld, IR or BCF.

## Claims

1. - Set of energy submeters of the type used in dwellings to carry out the distribution, on each landing, of the individual consumption of domestic hot water and for heating and other various uses in each dwelling **characterised in that** it comprises a manifold for heating (1) and another manifold for hot domestic water (2), the manifold for heating (1) being provided with inlet pipes (3) and return pipes (4), both made of thermoplastic material except for the threads that are metallic, and with a plurality of individual inlet and return pipes, one of each for each different dwelling, which in turn each include at least one energy meter (15) with separate temperature probe (16) and an electrovalve (11) for the remote opening and closing of the supply, and the manifold for domestic hot water (2) being provided with an inlet pipe (26), made of thermoplastic material except for the threads that are metallic, from which the individual inlet pipes for each dwelling emerge, which in turn each include at least one energy meter (30).

2. - Set of energy submeters, according to the preceding claim, wherein the inlet pipe (3) is provided with an inlet valve (5) and a mesh filter (7) and the return pipe (4) is provided with an outlet valve (6) and a non-return valve (8),

3. - Set of energy submeters, according to the previous claims, wherein the inlet pipes (3) and return pipes (4) end, at the opposite end to that of the inlet valves (5) and outlet valves (6), with an inlet manifold cap (9) and a return manifold cap (10) respectively.

4. - Set of energy submeters, according to either of claims 1 and 2, wherein the inlet pipes (3) and return pipes (4), at the opposite end to that of the inlet valve (5) and outlet valve (6) have screwed terminals.

5. - Set of energy submeters, according to any of the preceding claims, wherein from the inlet pipe (3) a plurality of individual inlet pipes with a smaller section emerge, each of which incorporates at least one screw-down valve (12), the electrovalve (11) for the remote opening and closing of supply, another screw-down valve (13) with the temperature probe (16) located on its lower part, and several connections for the outlet circuits (19) also made with thermoplastic pipes (20).

6. - Set of energy submeters, according to any of the preceding claims, wherein emerging from the return pipe (4) is a plurality of individual return pipes with a smaller section, raised by means of elbows (23) which allow these pipes to be positioned on a higher plane, parallel to that of the pipes emerging from the inlet manifold (3) and which include at least one screw-down valve (12), energy meter (15) with connecting cable (17) that connects it electrically to the temperature probe (16) located on the inlet pipe.

7. - Set of energy submeters, according to any of the preceding claims, wherein the return pipe (4) also includes a balancing valve (14) and a check valve (18), ending in several connections for outlet circuits (21) also made with thermoplastic pipes (22).

8. - Set of energy submeters, according to any of the preceding claims, wherein the manifold assembly for heating (1) is supported by a metallic base structure (24) by means of a plurality of isophonic clamps (25).

9. - Set of energy submeters, according to the preceding claim, wherein the inlet pipe (26) has an inlet valve (27) and a mesh filter (28).

10. - Set of energy submeters, according to the preceding claims, wherein the inlet pipe (26) ends, at the opposite end to that of the inlet valve (27), with an inlet pipe cap (29).

11. - Set of energy submeters, according to any of claims 1, 2, 3, 4, 5, 6, 7, 8, and 9, wherein the inlet pipe (26) ends, at the opposite end to that of the inlet valve (27), with a screwed terminal.

12. - Set of energy submeters, according to any of the preceding claims, wherein from the inlet pipe (26) emerge a plurality of individual inlet pipes with a smaller section, and which include at least one screw-down valve (12), an energy meter (30) and a screw-down non-return valve (31), ending in a connection (32) for the outlet circuits.

13. - Set of energy submeters, according to any of the preceding claims, wherein the domestic hot water manifold assembly (2) is supported by a metallic base structure (34) by means of a plurality of isophonic clamps (25).

14. - Set of energy submeters, according to the preceding claims, wherein the thermoplastic material used in the inlet pipe (3), the outlet pipe (4), the inlet pipe (26), and the connections of the outlet circuit (19) and return circuit (21), as well as their thermoplastic pipes (20,22) and elbows (23) is a material from the group of: PP-R PN 20 (third-generation polypropylene random copolymer), PE-100 PN 16 (high density polyethylene), PB PN 16 (polybutylene), ABS PN 25 (Acrylonitrile styrene butadiene), PP-R with fibre and PP-R with aluminium core.

15. - Set of energy submeters, according to any of the preceding claims, wherein the weld between the thermoplastic elements is one from the group of: socket weld, butt weld, electrofusion weld, chemical weld, IR and BCF.

16. - Set of energy submeters, according to any of the preceding claims, wherein the inlet valve (5) is a ball valve.

17. - Set of energy submeters, according to any of the preceding claims, wherein the outlet valve (6) is a ball valve.

18. - Set of energy submeters, according to any of the preceding claims, wherein the inlet valve (27) is a ball valve.

19. - Set of energy submeters, according to any of the preceding claims, wherein the outlet valve (6) is a ball valve.

20. - Set of energy submeters, according to any of the preceding claims, wherein the screw-down valves (12,13,31) are ball valves.

21. - Set of energy submeters, according to any of the previous claims, wherein the electrovalve (11), has a membrane that withstands temperatures of up to more than 110°C.
